# EUROPÄISCHE PATENTANMELDUNG

(11) **EP 1 431 719 A1**
(43) Veröffentlichungstag der Anmeldung: **23.06.2004**
(21) Anmeldenummer: 02028557.3
(22) Anmeldetag: 20.12.2002
(51) Int. Cl.: G01F 1/84

(54) **Coriolis Massendurchfluss/Dichteaufnehmer mit einem einzigen geraden Messrohr**

(71) Anmelder: ABB Research Ltd., 8050 Zürich (CH)
(72) Erfinder: Kassubek, Frank, Dr., 5404 Dättwill (CH); Riegler, Peter, Dr., 37077 Göttingen (DE); Gebhardt, Jörg, Dr., 55130 Mainz (DE); Waldi, Wolfgang, 69226 Nussloch (DE); Hug, Kuno, 69118 Heidelberg (DE); Disselnkötter, Rolf, Dr., 69256 Mauer (DE)
(74) Vertreter: Fritsch, Klaus

(57) **Zusammenfassung**

Es wird ein Coriolis Massendurchfluss/Dichte-Aufnehmer (100) beschrieben, bei dem das Messrohr (10) durch eine Erregeranordnung (16) in gekoppelte Biege- und Torsionsschwingungen versetzt ist. Am Einlassende (11) und am Auslassende (12) des Messrohres (10) sind Flansche (5a, 5b) fixiert. Ferner sind an dem Messrohr (10) wenigstens zwei Auslegermassen (300, 400, 20, 20a, 20b, 20d) fixiert, und die Schwerpunkte der Auslegermassen (204, 304, 20, 20a, 20b, 20d) liegen in einer gemeinsamen, senkrecht zur Biegeschwingungsebene durch die Längsachse (15) des Messrohres (10) verlaufenden Ebene, jedoch nicht auf der Längsachse (16) des Messrohres (10). Die Auslegermassen (200, 300, 20, 20a, 20b, 20d) sind hinsichtlich ihrer Masse, der Lage ihres Schwerpunktes und ihres inneren Trägheitsmomentes so ausgebildet und auf dem Messrohr (10) angeordnet, dass der gemeinsame Schwerpunkt des Systems, welches aus dem Messrohr (10) und den Auslegermassen (200, 300, 20, 20a, 20b, 20d) gebildet ist, in Ruhe bleibt.

## Beschreibung

Die Erfindung betrifft Coriolis Massendurchfluss/Dichteaufnehmer (CMD) mit einem einzigen geraden Messrohr.

CMD regen das vom Fluid durchströmte Messrohr zu einer periodischen Bewegung an und messen die Kraftwirkung des Fluides auf die Rohrwand an mindestens zwei Stellen. Aus der Phasendifferenz der Messsignale an den Messstellen kann der Massendurchfluss ermittelt werden.

Von Bedeutung sind dabei einerseits die Schwingungs-Eigenfrequenz des Messrohres, hier auch Messrohr-Schwingungsmode genannt, und die sogenannte Coriolis-Eigenfrequenz oder Coriolis-Mode. Das Messrohr in einem CMD wird üblicherweise zu Schwingungen in einer Messrohr-Mode angeregt. Die Coriolis-Mode ist die durch die Corioliskraft bevorzugt angeregte Schwingungsfrequenz. Idealerweise liegen Messrohr-Mode und Coriolis-Mode nahe beieinander, denn dann ist die Sensitivität gegenüber Durchfluss und Dichte am größten.

Die für den Messvorgang wesentliche Oszillationserregung bringt allerdings hohe Anforderungen an die konstruktive Gestaltung der CMD mit sich. CMD müssen schwingungstechnisch möglichst vollständig von ihrer Umgebung (insbesondere der Rohrleitung, in der sie eingebaut sind) abgekoppelt sein. Im Stand der Technik wird dies vielfach zu erreichen versucht, indem Doppelrohrkonstruktionen und/oder gebogene Messrohre verwendet werden. Prozesstechnisch sind einrohrige, ungebogene Messrohre allerdings vorzuziehen.

Bei den einrohrigen CMD besteht eine im Stand der Technik bekannte Möglichkeit zur Schwingungsentkopplung darin, CMD mit einer großen Masse zu versehen bzw. insgesamt so zu bauen, dass die Gesamtmasse hoch ist. Im Stand der Technik sind CMD daher äußerst schwer. Insbesondere steigt die Gesamtmasse mit zunehmenden Rohrinnendurchmesser deutlich an. Daher werden CMD für große Rohrinnendurchmesser selten verwendet.

Ein weiterer Nachteil besteht darin, das die schwingungsmäßige Entkopplung in der Regel nur für eine Fluiddichte gelingt. Eine Änderung der Dichte aufgrund einer Änderung der Temperatur oder der Zusammensetzung des Messmediums führt daher wieder zu einer schwingungstechnischen Kopplung des CMD mit der Rohrleitung, in die es eingebaut ist. Ein wesentliches Merkmal für die Einsetzbarkeit eines CMD ist daher, ob er eine schwingungsmäßige Entkopplung für einen großen Dichtebereich erzielt. Der CMD besitzt dann eine "gute Balancierung".

In der EP 0 849 568 ist ein CMD beschrieben, der in eine Rohrleitung einfügbar ist und im Betrieb von einem zu messenden Fluid durchströmt wird,
- mit einem einzigen, geraden, eine Längsachse, ein Einlassende und ein Auslassende aufweisenden Messrohr,
- mit einer das Messrohr wenigstens in Biegeschwingungen versetzenden Erregeranordnung, die zwischen Einlass- und Auslassende des Messrohres angeordnet ist,
- mit wenigstens zwei Sensoren zur Erfassung der Bewegung des Messrohres, wobei jeweils ein Sensor zwischen der Mitte des Messrohres und dem Einlass- bzw. Auslassende des Messrohres angeordnet ist,
- mit eingangsseitig und ausgangsseitig an das Messrohr angebrachten Flanschen, und
- mit einem Gehäuse, das wenigstens in einer der in der EP 0 849 568 gezeigten Ausführungsformen mit den Flanschen verbunden ist,
und der anscheinend eine gute schwingungstechnische Entkopplung des CMD von der Rohrleitung erzielt. Zur Balancierung wird hierbei die recht große Gegenmasse eines am Einlassende und am Auslassende des Messrohres fixierten Trägers verwendet, wobei eine Längsschwereachse des Trägers parallel zur Längsachse des Messrohres verläuft, jedoch nicht mit dieser zusammenfällt. Der Träger selbst ist entweder als Rohr mit entweder gleichförmiger oder stellenweise unterschiedlicher Wandstärke ausgeführt, oder als Teilvorrichtung bestehend aus zwei Trägerplatten und einer mit diesen verbundenen Gegenmasse, die an einer Einlass- und Auslassplatte befestigt sind. Die Flansche zum fluiddichten Einbringen des CMD in eine Rohrleitung sind außerhalb des Trägers an je einem einlassseitig und auslassseitig am Messrohr zusätzlich angebrachten Rohrstück befestigt. Ein Gehäuse umschließt das Messrohr und den Träger, in Art einer Rohr-in-Rohr Anordnung, wobei das Gehäuse an den Flanschen fixiert ist. Die mechanische Konstruktion ist somit relativ kompliziert und aufwändig, und das Gesamtgewicht des CMD gemäß der EP 0 849 568 ist recht erheblich.

Es ist daher die Aufgabe der vorliegenden Erfindung, einen Coriolis Massendurchfluss/Dichteaufnehmer zu schaffen, der sich neben einer guten schwingungstechnischen Balancierung über einen weiten Dichtebereich und daraus sich ergebender guter Sensitivität gegenüber Massedurchfluss und Dichte sowie geringer Querempfindlichkeit gegenüber äußerer Störgrößen wie Temperatur und Druckschwankungen sich vor allem durch ein geringes Gesamtgewicht, kompakte Abmessungen, einen einfachen und robusten Aufbau und leichte Herstellbarkeit auszeichnet.

Die Aufgabe wird gelöst durch einen Coriolis Massendurchfluss/Dichteaufnehmer mit den kennzeichnenden Merkmalen des Anspruchs 1.

Erfindungsgemäß also ist das Messrohr durch die Erregeranordnung in gekoppelte Biege- und Torsionsschwingungen versetzt; an dem Messrohr sind wenigstens zwei Auslegermassen fixiert, und die Schwerpunkte der Auslegermassen liegen in einer gemeinsamen, senkrecht zur Biegeschwingungsebene durch die Längsachse des Messrohres verlaufenden Ebene, jedoch im Allgemeinen nicht auf der Längsachse des Messrohres. Die Auslegermassen sind hinsichtlich ihrer Massen, der Lage ihrer Schwerpunkte und ihrer inneren Trägheitsmomente so ausgebildet und auf dem Messrohr angeordnet, dass eine gute Balancierung des Gerätes erreicht ist, was bedeutet, dass über einen weiten Dichtebereich keine Kräfte an den Flanschen auskoppeln und die Empfindlichkeit gegen äußere Störungen somit stark verringert wird. Dies wird insbesondere dadurch erreicht, dass die Bewegung des gemeinsamen Schwerpunkts des Systems, welches aus dem Messrohr und den Auslegermassen gebildet ist, stark reduziert wird.

In einer vorteilhaften Ausgestaltungsform ist ein wenigstens zu einem Teil geschlossenes Trag-Gehäuse vorgesehen, das mit den Flanschen verbunden ist, und die Flansche sind direkt am Einlassende und am Auslassende des Messrohres fixiert. Dieses Trag-Gehäuse dient zur Befestigung von Sensoren und der Erregeranordnung; es ist nicht notwendigerweise funktionsgleich mit einem Gehäuse im Sinne des Standes der Technik, das als äußere Schutzumhüllung des gesamten Messgerätes dient, kann aber auch diese Schutz-Funktion gleichzeitig mit seiner Trag- oder Befestigungsfunktion übernehmen.

Gemäß einer besonders vorteilhaften Ausgestaltung der Erfindung ist das Trag-Gehäuse steif und weist eine Längs-Schwerelinie auf, die parallel zur Längsachse des Messrohres verläuft und mit dieser zusammenfällt. Steif bedeutet dabei, dass die Eigenfrequenz des Trag-Gehäuses wesentlich höher ist als die Eigenfrequenz des Messrohres und die Coriolis-Eigenfrequenz oder Coriolis-Mode. Die Einspannstellen des schwingungsfähigen Messrohres liegen somit an den Flanschen, mit denen der Coriolis Massendurchfluss/Dichte-Aufnehmer fluiddicht in eine Rohrleitung eingebaut wird. Da erfindungsgemäß auch das Trag-Gehäuse an den Flanschen fixiert ist, bilden die Flansche aus schwingungstechnischer Sicht die Bezugspunkte, auch mechanische Erde genannt, des Systems bestehend aus Messrohr, Trag-Gehäuse und Auslegermassen. Das Trag-Gehäuse kann dabei ein das Messrohr mit den Auslegermassen umfassendes Rohr sein. Dadurch, dass die Schwerelinie des Trag-Gehäuses mit der Messrohrachse zusammenfällt, wird erreicht, dass Torsionskräfte auf das Trag-Gehäuse keine linearen Kräfte nach außen auskoppeln.

In einer vorteilhaften Ausführungsform bestehen die Auslegermassen aus jeweils einem steifen, auf dem Messrohr fixierten Trägerelement mit wenigstens einem daran angebrachten Massenelement. Das Trägerelement wird insbesondere dann als steif bezeichnet, wenn seine Eigenfrequenz deutlich höher liegt als die Eigenfrequenz des Messrohres.

Ferner hat es sich als sehr vorteilhaft erwiesen, wenn die Auslegermassen so ausgebildet sind, dass die Befestigungspunkte in der Ebene liegen, in der sich der Schwerpunkt der Auslegermassen befindet und die senkrecht auf der Messrohrachse steht. Bei einem punktuell befestigten Trägerelement kann das dadurch erreicht werden, dass die Lotlinie der Auslegermasse, die senkrecht auf der Biegeschwingungsebene und der Längsachse des Messrohres steht, durch den Befestigungspunkt verläuft. Bei einem Trägerelement, das in einer Fläche mit dem Messrohr verbunden ist, bedeutet es, dass die Lotlinie durch die Befestigungsfläche verläuft.

Im Unterschied zu den aus dem Stand der Technik bekannten Lösungen wird bei dem Gegenstand der vorliegenden Erfindung die Balancierung dadurch erreicht, dass an das vom Fluid durchströmte Rohr punktuell eine begrenzte Anzahl von Zusatzmassen oder Auslegermassen angebracht wird, die exzentrisch bezüglich der Rohrachse angeordnet sind, d.h. deren Schwerpunkte nicht auf der Längsachse des Messrohres liegen. An diesen Stellen des Rohres werden Torsion und Biegung gekoppelt, und dadurch Kräfte und Momente, die durch die Oszillation entstehen, passiv kompensiert. Das geschieht so, dass die Auslegemassen über die Torsion Kräfte in Biegerichtung des Rohres ausüben, die bei entsprechender Dimensionierung der Auslegermassen Kräfte und Momente der Biegeoszillation kompensieren können. Die Massen und das Rohr bewegen sich bei einer Eigenschwingung so, dass der gemeinsame Schwerpunkt weitgehend in Ruhe bleibt, somit treten keine Randkräfte auf. Auf diese Weise kann man einen wesentlich leichteren, kompakteren und einfacher zu montierenden Coriolis Massendurchfluss/Dichteaufnehmer herstellen als mit den nach dem Stand der Technik bekannten Methoden.

Jede der punktuell angebrachten Auslegermassen ist mechanisch gekennzeichnet durch ihre jeweilige Masse, die Lage ihres Schwerpunktes relativ zum Befestigungspunkt und ihr internes Trägheitsmoment. Die Kräfte und Momente, die von den Auslegermassen zur Schwingungskompensation aufgebracht werden, sind über diese kennzeichnenden Abmessungen steuerbar. Durch Anwendung von im Prinzip bekannten mechanischen Berechnungsmethoden, die das mechanische Modell durch ein System vorzugsweise partieller Differentialgleichungen berechenbar machen und auf die hier nicht näher eingegangen werden soll, können balancierte Konfigurationen mit den daraus resultierenden Massen und geometrischen Maßangaben für die Lage der Schwerpunkte der Auslegermassen relativ einfach gefunden werden.

Erfindungsgemäß aufgebaute Coriolis-Massendurchfluss/Dichteaufnehmer zeichnen sich dadurch aus, dass die balancierte Messrohr-Schwingungsmode sehr nahe an der in der Literatur als Coriolis-Mode bezeichneten Eigenschwingungsform des Messrohres liegen kann und somit eine sehr hohe Sensitivität gegenüber den Messgrößen Durchfluss und Dichte, jedoch eine sehr geringe Sensitivität auf Störungen, die an andere Schwingungsmoden ankoppeln, zeigen können.

Eine vorteilhafte Ausgestaltung der Erfindung kann aber auch dadurch gekennzeichnet sein, dass die Auslegermassen so ausgestaltet sind, dass die Lotlinie jeder Auslegermasse, die senkrecht auf der Biegeschwingungsebene und der Längsachse des Messrohres steht, das Messrohr nicht am Ort der Befestigung des Trägerelementes auf dem Messrohr schneidet. Das bedeutet mit anderen Worten, dass bei einem punktuell auf dem Messrohr befestigten Trägerelement die Verbindungslinie zwischen dem Schwerpunkt der Auslegermasse und dem Befestigungspunkt des Trägerelementes auf dem Messrohr in ihrer Verlängerung zur Längsachse des Messrohres einen von 90 Grad verschiedenen Winkel mit der Längsachse des Messrohres bildet. Bei einem Trägerelement, das in einer Fläche mit dem Messrohr verbunden ist, bedeutet das, dass die Lotlinie außerhalb der Befestigungsfläche die Messrohroberfläche durchdringt. Daraus resultiert, dass solcherart gestaltete Auslegermassen über die Torsion Kräfte und zusätzlich Momente in Biegerichtung des Rohres ausüben, die bei entsprechender Dimensionierung der Auslegermassen Kräfte und Momente der Biegeoszillation kompensieren können. Insbesondere ist es dann möglich, eine sehr gute Balancierung schon mit zwei Auslegermassen zu erreichen. Die mechanische Auslegung der Auslegermassen bei dieser Ausgestaltungsform ergibt sich unter Zuhilfenahme derselben, oben bereits erwähnten mechanischen Berechnungsmethoden.

Sehr vorteilhaft ist auch eine Ausgestaltungsform, bei der die Auslegermassen paarweise symmetrisch angeordnet sind bezogen auf eine senkrecht zur Biegeschwingungsebene verlaufenden Geraden, die durch den auf der Längsachse gelegenen Mittelpunkt des Messrohres verläuft

Eine weitere vorteilhafte Ausgestaltungsmöglichkeit der Erfindung sieht vor, dass die Massenelemente auf den Trägerelementen ortsverschieblich verstellbar sind, so dass dadurch die Lage der Schwerpunkte der Auslegermassen veränderbar ist. Der Coriolis-Massendurchfluss/Dichte-Aufnehmer könnte dann nach der Montage entweder von Hand oder auch automatisch durch geeignete elektrische oder mechanische Vorrichtungen, wie z.B. Stellglieder, einjustiert oder "getrimmt" werden. Die Anforderung an die Präzision bei der Montage der Auslegermassen wäre damit reduziert, was eine einfachere und somit preiswertere Montage ermöglichen würde.

Die Sensoren zur Erfassung der Bewegung des Messrohres könnten auch in den Auslegermassen integriert sein, so dass dadurch insgesamt eine Reduzierung der Zahl der am Rohr angebrachten Massen erreichbar ist.

Als Sensoren zur Erfassung der Bewegung des Messrohres können erfindungsgemäß die zu diesem Zweck in der Literatur für den Einsatz in Coriolis Massedurchfluss/Dichteaufnehmern oder Coriolis Massedurchflussaufnehmern beschriebenen Arten von Sensoren dienen, wie z.B. Weg-, Geschwindigkeits- oder Beschleunigungssensoren, die z.B. elektrodynamisch oder optisch arbeiten. Die Art und Wahl des jeweiligen Sensors sind dabei unabhängig davon, ob der Sensor in der Auslegermasse integriert oder als getrenntes Bauteil am Messrohr angebracht ist.

Als Erregeranordnung können die für diesen Zweck im Stand der Technik von Coriolis-Massendurchfluss/Dichteaufnehmern oder Coriolis-Massendurchflussaufnehmern beschriebenen Arten von Erregeranordnungen dienen.

In besonders vorteilhafter Weise liegt der Einwirkungspunkt des Erregers auf das Messrohr zwischen dem Einlassende bzw. dem Auslassende des Messrohres und einer der Auslegermassen, wobei er insbesondere zwischen zwei Auslegermassen liegen kann. Der Einwirkungspunkt kann aber auch auf einer der Auslegermassen liegen.

Weitere vorteilhafte Ausgestaltungen und Verbesserungen der Erfindung sind den weiteren Unteransprüchen zu entnehmen.

Anhand der Zeichnungen, in denen 4 Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine Querschnittsansicht eines erfindungsgemäßen Coriolis-Massendurchfluss/Dichteaufnehmers,
- Fig. 2: eine Detailansicht von Fig. 1 mit exemplarischer Darstellung zweier erfindungsgemäßer Ausführungsformen der Auslegermasse,
- Fig. 3: eine Gehäusevariante für einen erfindungsgemäßen Coriolis-Massendurchfluss/Dichteaufnehmer, und
- Fig. 4: eine schematische weitere Ausführungsform eines erfindungsgemäßen Coriolis-Massendurchfluss/Dichteaufnehmers.

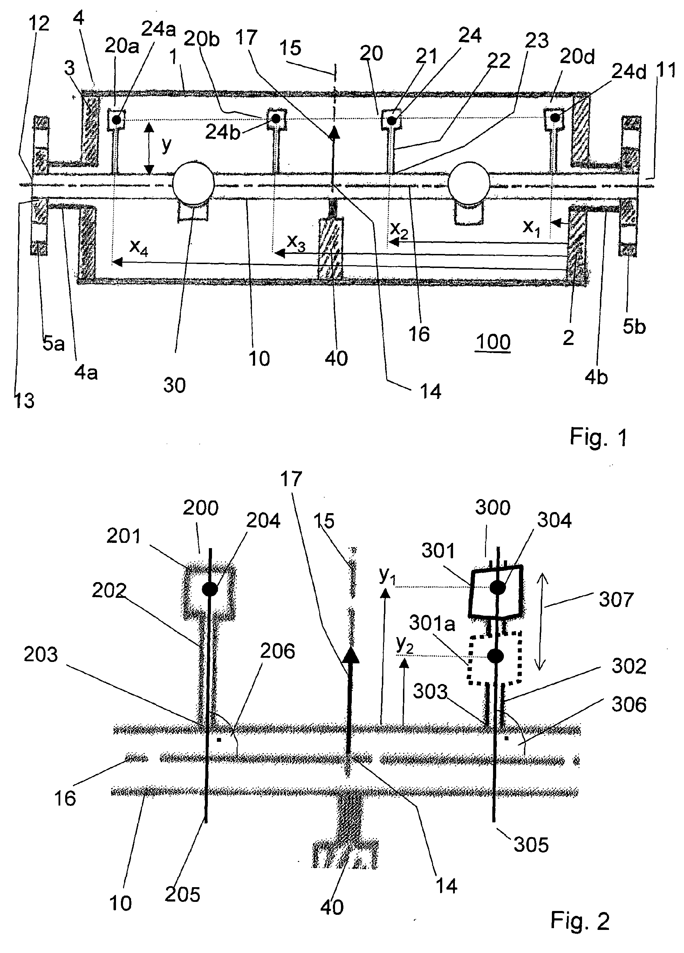

Der in der Fig. 1 dargestellte Coriolis-Massendurchfluss/Dichteaufnehmer 100 weist ein von einem Messfluid durchfließbares Messrohr 10 auf, an dessen Einlassende 11 ein Einlassflansch 5b und an dessen Auslassende 12 ein Auslassflansch 5a angebracht sind. Die Einlass- und Auslassflansche 5a, 5b werden im folgenden kurz auch als Flansche 5a, 5b bezeichnet. Die Flansche 5a und 5b sind an je einer Befestigungsstelle 13 am Einlass- bzw. Auslassende 11, 12 des Messrohres 10 befestigt, z.B. aufgeschweißt, andere Befestigungsarten wie beispielsweise Aufschrumpfen wären aber auch möglich. Mit Hilfe der Flansche 5a und 5b kann der Coriolis-Massendurchfluss/Dichteaufnehmer 100 fluiddicht in ein Rohrleitungssystem eingebaut werden. An dem Auslassflansch 5a ist ein Auslass-Rohrstück 4a so befestigt, dass dieses das Messrohr 10 konzentrisch umgibt, ohne es zu berühren. Ebenso ist am Einlassflansch 5b ein Einlass-Rohrstück 4b so befestigt, dass es das Messrohr 10 konzentrisch umgibt, ohne es zu berühren. An der dem Einlass- bzw. Auslassflansch 5b, 5a jeweils abgewandten Seite des Einlass- bzw. Auslassrohrstückes 4b, 4a ist jeweils eine Einlassplatte 2 bzw. eine Auslassplatte 3 angebracht. Einlass- bzw. Auslassplatte 2, 3 sind hier kreisförmige Scheiben mit einem Innenloch, dessen Durchmesser dem Außendurchmesser des Einlass- bzw. Auslassrohrstückes 4b, 4a entspricht. Die Befestigung der Einlass- bzw. Auslassplatte 2, 3 auf dem jeweiligen Einlass- bzw. Auslassrohrstück 4b, 4a kann dabei wiederum durch Schweißen oder eine andere Befestigungsmethode gemäß dem Stand der Technik erfolgen. An der Einlass- bzw. Auslassplatte 2, 3 ist ein Verbindungselement 1, hier ein Rohrstück mit kreisförmigem Querschnitt angebracht. Das Verbindungselement 1 wird daher im folgenden auch als Gehäuserohr bezeichnet. Das Gehäuserohr 1, die Einlass- und Auslassplatte 2, 3 und die Einlass- und Auslassrohrstücke 4b, 4a bilden zusammen das Trag-Gehäuse 4 des Coriolis-Massendurchfluss/Dichteaufnehmers 100.

Das Messrohr 10 weist eine Längsachse 16 und eine Mittelachse 15, die senkrecht zur Längsachse und mittig zwischen dem Einlass- und Auslassende 11, 12 des Messrohres 10 verläuft, auf. Die Mittelachse 15 und die Längsachse 16 schneiden sich im Rohrmittelpunkt 14. Eine Erregeranordnung 40, im folgenden kurz auch Erreger genannt, ist mit einem Ende an der Innenseite des Gehäuses befestigt, und wirkt auf das Messrohr 10 so ein, dass dieses im Betrieb in gekoppelte Biege- und Torsionsschwingungen versetzt ist. Der Einwirkungspunkt des Erregers liegt dabei in der Mitte des Messrohres und auf dessen äußerer Oberfläche. Die Biegeschwingungsebene verläuft durch die Längsachse 16 des Messrohres 10, ihr Normalenvektor 14 entspringt dem Messrohrmittelpunkt und steht senkrecht auf der Längsachse 16 des Messrohres. Die Biegeschwingungsebene verläuft also bei dem in Fig. 1 dargestellten Coriolis-Massendurchfluss/Dichte-Aufnehmer senkrecht zur Zeichenblattebene durch die Messrohrlängsachse 16.

Die Befestigungsstellen 13, an denen die Flansche 5a, 5b mit den Messrohrenden 11, 12 verbunden sind, bilden hier aus schwingungstechnischer Sicht die auch mechanische Erde genannten Bezugspunkte des schwingungsfähigen Systems aus Trag-Gehäuse 4, Messrohr 10 und Auslegermassen 20, 20a, 20b, 20d (siehe unten). Eine Schwerelinie des Trag-Gehäuses 4 verläuft parallel zur Längsachse 16 des Messrohres 10 und fällt mit dieser zusammen. Die Schwerelinie ist dabei diejenige Linie, die die Schwerpunkte aller senkrecht zur Längsachse 16 des Messrohres 10 ausgeführten Querschnitte des Trag-Gehäuses 4 miteinander verbindet.

An dem Messrohr 10 sind rechts und links von der Mittelachse 15 des Messrohres 10 zwei Sensoren 30 zur Erfassung der Bewegung des Messrohres 10 angebracht.

An dem Messrohr 10 sind vier Auslegermassen 20, 20a, 20b, 20d fixiert. Die Auslegermassen 20, 20a, 20b, 20d sind paarweise symmetrisch bezüglich der Messrohrmittelachse 15 angeordnet. Details der Auslegermassengestaltung und Anbringung sind auch der Fig. 2 anhand der dort dargestellten Auslegermassen 200 und 300 entnehmbar. Die Fig. 2 ist eine vergrößerte Darstellung des mittleren Abschnitts der Fig. 1. Messrohr 10" Messrohrmittelachse 16, Messrohrmittelachse 15, Messrohrmittelpunkt 14, Normalenvektor 17 der Biegeschwingungsebene und Erregeranordnung 40 haben in Fig. 1 und 2 die gleichen Bezugszeichen.

Wie in Fig. 1 dargestellt, besteht die Auslegermasse 20 aus einem Trägerelement 22, hier in Form eines stäbchenförmigen Quaders oder Kreiszylinders. Das Trägerelement 22 ist in einer Befestigungsfläche 23 auf der Außenseite des Messrohres 10 fixiert, beispielsweise durch Schweißen, so dass es senkrecht von der Messrohroberfläche in den Außenraum des Messrohres hinein absteht. An seinem dem Befestigungsende entgegengesetzten Ende ist an dem Trägerelement 22 ein Massenelement 21 fixiert. Der Schwerpunkt 24 der aus dem Trägerelement 22 und dem Massenelement 21 gebildeten Auslegermasse 20 liegt in der in Fig. 1 gezeigten Ausführungsform innerhalb des Massenelementes 21. Bei anderen Ausführungsformen kann der Schwerpunkt der Auslegermasse jedoch auch innerhalb des Trägerelements liegen. Bei den drei anderen Auslegermassen 20a, 20b, 20d in Fig. 1 tragen gleiche Bauteile die gleichen Bezugsziffern wie bei der Auslegermasse 20, jeweils um den Unterscheidungsbuchstaben a, b, d ergänzt. Die Schwerpunkte 24, 24a, 24b, 24d der Auslegermassen 20, 20a, 20b, 20d liegen, wie in Fig. 1 dargestellt, in einer gemeinsamen Ebene, die senkrecht zur Biegeschwingungsebene und durch die Messrohrmittelachse 16 verläuft, also bei dem in Fig. 1 dargestellten Coriolis-Massendurchfluss/Dichteaufnehmer 100 mit der Zeichenblattebene zusammenfällt. Die Schwerpunkt liegen jedoch nicht in der Messrohrlängsachse 16, sondern außerhalb des Messrohres in dem Raum zwischen dem Messrohr 10 und dem Verbindungselement 1.

In Fig. 2 ist die Befestigung der Auslegermasse auf der Messrohroberfläche noch genauer dargestellt. Die Auslegermasse 200 in Fig. 2 sei aufgebaut wie die Auslegermassen 20, 20a, 20b, 20d in Fig. 1 und exemplarisch hier beschrieben. Eine Lotlinie 205 der Auslegermasse 200, also eine Linie, die durch den Schwerpunkt 204 läuft, steht senkrecht auf der Biegeschwingungsebene, festgelegt durch deren Normalenvektor 17 und die Messrohrlängsachse 16. Sie bildet mit der Messrohrlängsachse 16 einen rechten Winkel 206. Am Ort der Befestigung des Trägerelementes 202 auf der Messrohroberfläche, der Befestigungsfläche 23, läuft die Lotlinie 205 innerhalb des Trägerelements 202.

Das Trägerelement 202, und auch alle anderen Trägerelemente 22, 22a, 22b, 22d, ist steif bezogen auf das Messrohr 10, d.h. seine Resonanzfrequenz liegt deutlich höher als die Resonanzfrequenz des Messrohres 10. In dem in Fig. 1 gezeigten Beispiel kann eine Resonanzfrequenz des Messrohres 10 bei 800 Hz liegen, die Resonanzfrequenz der Trägerelemente 22, 22a, 22b, 22d beträgt dann beispielsweise 1500Hz.

Wenn das Messrohr 10, wie in dem Beispiel der Fig. 1 und 2 gezeigt, in eine gekoppelte Biege- und Torsionsschwingung versetzt ist, werden an den Auslegermassen Torsion und Biegung gekoppelt, und dadurch Kräfte und Momente, die durch die Oszillation entstehen, passiv kompensiert. Das geschieht so, dass die Auslegermassen über die Torsion Kräfte in Biegerichtung des Rohres ausüben, die bei entsprechender Dimensionierung der Auslegermassen Kräfte und Momente der Biegeoszillation bei verschiedenen Dichten kompensieren können. Die Massen und das Rohr bewegen sich bei einer Eigenschwingung so, dass der gemeinsame Schwerpunkt in Ruhe bleibt, somit treten keine Randkräfte auf. Auf diese Weise wird der Coriolis Massendurchfluss/Dichteaufnehmer 100 sehr leicht und kompakt. Beispielsweise wurde für einen Coriolis Massendurchfluss/Dichteaufnehmer 100 mit einer Nennweite des Messrohres 10 von 15 mm, in der Fachwelt als DN 15 bezeichnet, ein Gesamtgewicht von nur 7 kg erreicht, bei einem Außendurchmesser des Gehäuses von 10 cm. Die Einbaulänge betrug 52 cm. Die balancierte Schwingungsmode lag bei dem beispielhaften Coriolis-Massendurchfluss/Dichteaufnehmer 100 nach Fig. 1 nur 80Hz von der Coriolis-Mode entfernt, während alle anderen relevanten Schwingungsmoden wenigstens 400 Hz entfernt lagen. Dies ist die Vorraussetzung dafür, dass der Coriolis-Massendurchfluss/Dichteaufnehmer 100 eine sehr hohe Sensitivität gegenüber den Messgrößen Durchfluss und Dichte, jedoch eine sehr geringe Sensitivität auf Störungen, die an andere Schwingungsmoden ankoppeln, zeigt. Die schwingungsmäßige Entkopplung der Vibrationen des Rohres von der äußeren Rohrleitung gelingt über einen weiten Dichtebereich und das Gerät ist somit balanciert.

Die Lageorte der Auslegermassen 20, 20a, 20b, 20d auf dem Messrohr 10, d.h. die Abstände x₁, x₂, x₃, x₄ der Schwerpunkte 24d, 24, 24b, 24a von der Einlassplatte 2, sowie der Abstand y der Schwerpunkte 24d, 24, 24b, 24a von der Messrohroberfläche, und die Masse der Massenelemente bestimmen die Güte der schwingungstechnische Balancierung des Coriolis-Massendurchfluss/Dichteaufnehmers 100. Die Kräfte und Momente, die von den Auslegermassen zur Schwingungskompensation aufgebracht werden, sind über diese kennzeichnenden Abmessungen steuerbar. Durch Anwendung von im Prinzip bekannten mechanischen Berechnungsmethoden, die das mechanische Modell durch ein System unter Verwendung von partiellen Differentialgleichungen berechenbar macht, werden die Massen und geometrischen Maßangaben für die Lage der Schwerpunkte der Auslegermassen relativ einfach gefunden. Bei der Montage ist darauf zu achten, dass die aus der Berechnung ermittelten geometrischen Maße für x₁, x₂, x₃, x₄ und y relativ präzise eingehalten werden, in dem Beispiel der Fig. 1 beispielsweise auf besser als 0,5mm genau.

In Fig. 2 ist mit der in der Zeichnung rechts von der Mittelachse gelegenen Auslegermasse 300 ein Beispiel für eine Auslegermasse mit auf dem Trägerelement 302 ortsverschieblich angebrachtem Massenelement 301 gezeigt. Das Massenelement 301 ist zwischen einer ersten Lage, in der der Schwerpunkt 304 einen ersten Abstand y₁ von der Messrohroberfläche einnimmt, und einer zweiten Lage, in der der Schwerpunkt 304 einen zweiten Abstand y₂ von der Messrohroberfläche einnimmt, wobei y₂ kleiner als y₁ ist, verschieblich angebracht. Dadurch ist die Lage des Schwerpunktes 304 der Auslegermasse 300 nach der Montage noch veränderbar. Der Coriolis-Massendurchfluss/Dichte-Aufnehmer 100 könnte dann nach der Montage entweder von Hand oder auch automatisch durch geeignete elektrische oder mechanische Vorrichtungen, wie z.B. Stellglieder, einjustiert oder "getrimmt" werden. Die Anforderung an die Präzision bei der Montage der Auslegermassen wäre damit reduziert, was eine einfachere und somit preiswertere Montage ermöglichen würde. Selbstverständlich könnten bei einem Coriolis-Massendurchfluss/Dichte-Aufnehmer 100 nach Fig. 1 auch zwei, drei oder alle vier Auslegermassen 20, 20a, 20b, 20d entsprechend der Auslegermasse 300 in Fig. 2 mit ortsverschieblich gelagertem Massenelement ausgebildet sein. Ebenfalls ist es denkbar, dass die Auslegermassen 20, 20a, 20b, 20d auch durch eine geeignete Vorrichtung auf der Messrohroberfläche in Richtung parallel zur Messrohrlängsachse verschieblich angebracht werden.

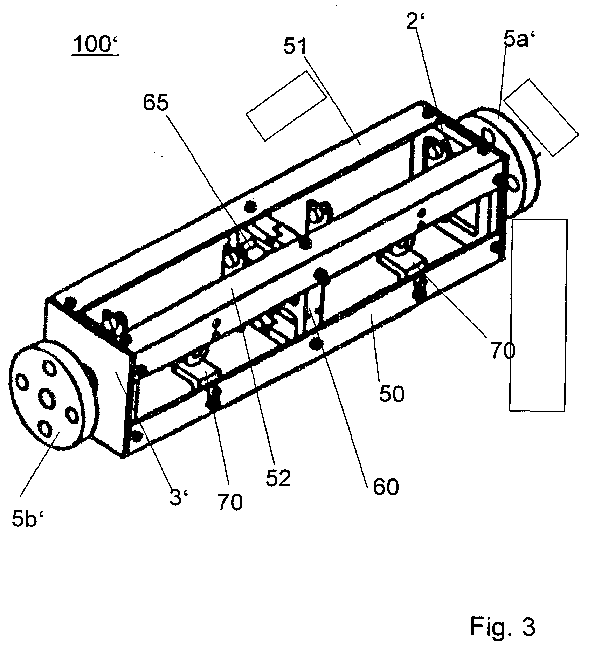

Figur 3 zeigt in perspektivischer Ansicht eine Gehäusevariante für einen erfindungsgemäßen Coriolis-Massendurchfluss/Dichte-Aufnehmer. Die Flansche 5a' und 5b' entsprechen den Einlass- bzw. Auslassflanschen 5a, 5b der Variante gemäß Fig. 1. die Einlassplatte 3' und die Auslassplatte 2' sind in der Variante gemäß Fig. 3 quadratisch ausgeführt. An der Einlassplatte 3' und der Auslassplatte 2' sind vier steife Trägerschienen befestigt, von denen in der Ansicht der Fig. 3 nur die drei Trägerschienen 50, 51, 52 sichtbar sind, die vierte Trägerschiene ist durch die Trägerschiene 52 verdeckt. Die vier Trägerschienen haben ein L-förmiges Profil, es könnte jedoch auch jedes beliebige andere für die Herstellung von Trägerschienen geeignete Profil sein. Sie sind zueinander so angeordnet, dass sie die Seitenkanten eines Quaders bilden, dessen Symmetrieachse mit der Längsachse des Messrohres zusammenfällt und dessen Stirnflächen durch die Einlassplatte 3' und die Auslassplatte 2' gebildet sind. Die Befestigung der Trägerschienen an den Einlass- bzw. Auslassplatten erfolgt in dem in Fig. 3 gezeigten Ausführungsbeispiel durch Schrauben; es könnte jedoch auch jede andere Befestigungstechnik gewählt werden.

In der Mitte zwischen Einlass- und Auslassende des Messrohres sind jeweils benachbarte Trägerschienen 50, 52 bzw. 51, 52 durch Verbindungsschienen 60 so verbunden, dass ein an den Trägerschienen 50, 51, 52 fixierter, rechteckiger Tragrahmen 65 entsteht, der senkrecht zur Längsachse des Messrohres orientiert ist.

An diesem Tragrahmen 65 ist die Erregeranordnung 40 befestigt, in der Fig: 3 allerdings durch die Trägerschiene 52 verdeckt.

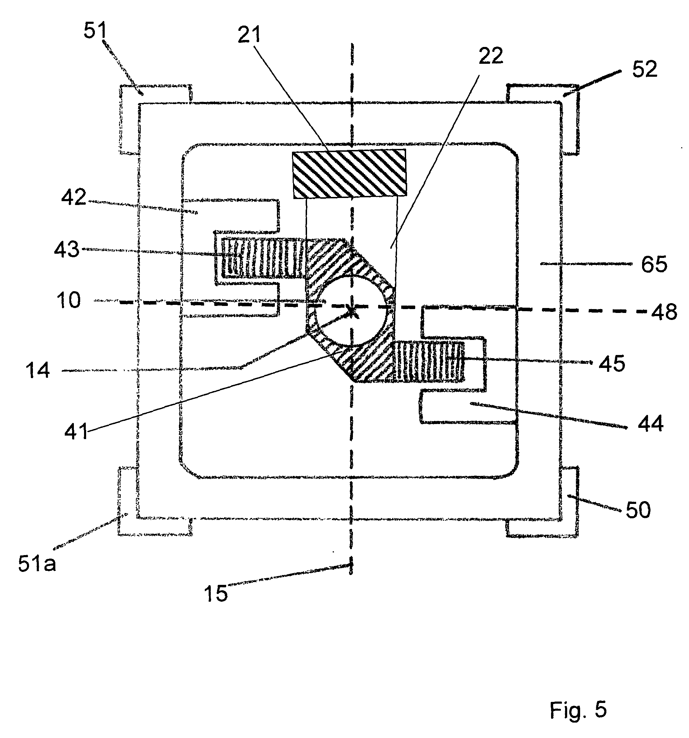

Figur 5 zeigt in schematischer Form Details der Erregeranordnung 40. Fig. 5 ist eine Querschnittsansicht durch den Coriolis-Massendurchfluss/Dichte-Aufnehmer 100' der Fig. 3, und zwar zeigt die Fig. 5 einen Querschnitt senkrecht zur Längsachse 16 des Messrohres 10 auf der Höhe der Verbindungsschiene 60. Gleiche Bezugszeichen in den Fig. 5, 3, 2 und 1 bezeichnen dabei gleiche Elemente und/oder Baugruppen. Die Mittelachse 15 des Messrohres 10 steht senkrecht auf der Biegeschwingungsebene 48 des Messrohres 10 und schneidet sich mit dieser im Mittelpunkt 14 des Messrohres 10. An dem Messrohr 10 sind die Auslegermassen 20, 20a, 20b, 20d hintereinander versetzt in Längserstreckungsrichtung des Messrohres 10 angebracht. In der Fig. 5 ist nur eine Auslegermasse 20, bestehend aus dem am Messrohr 10 befestigten Trägerelement 22 und dem an dem Trägerelement befestigten Massenelement 21 dargestellt. An dem Messrohr ist eine Fahne 41 befestigt, die beispielsweise ein Blech mit im wesentlichen rechteckiger Umfangskontur sein kann. Die Fahne 41 ist senkrecht zur Biegeschwingungsebene 48 des Messrohres 10 orientiert. Auf beiden Seiten der Mittelachse 15 des Messrohres sind an dem Rahmen 65 eine erste und eine zweite Spule 44, 42 befestigt. Diese sind im wesentlichen Torusspulen ohne Kern. Die beiden Spulen 44, 42 sind spiegelsymmetrisch zum Mittelpunkt 14 des Messrohres 10 und auf verschiedenen Seiten bezüglich der Biegeschwingungsebene 48 des Messrohres 10 angeordnet. An der Fahne 41 sind ein erster und ein zweiter zylindrischer Magnetkörper 45, 43 so angebracht, dass der erste zylindrische Magnetkörper 45 in die erste Spule 44 eintaucht und der zweite zylindrische Magnetkörper 43 in die zweite Spule 42 eintaucht.

Die Funktionsweise der solcherart beispielhaft realisierten Erregeranordnung 40 ist wie folgt: die Spulen 44, 45 werden wechselweise so von Strom durchflossen, dass abwechselnd der erste zylindrische Magnetkörper 45 in die erste Spule 44, und der zweite zylindrische Magnetkörper 43 in die zweite Spule 42 hineingezogen werden. Auf diese Weise wird das Messrohr 10 zu einer Torsionsschwingung um seine Längsachse angeregt. Dadurch, dass die Auslegermassen 20, 20a, 20b, 20d an dem Messrohr 10 befestigt sind,üben sie über die Torsion Kräfte in Biegerichtung des Messrohres 10 aus, so dass damit das Messrohr in eine gekoppelte Biege- und Torsionsschwingung versetzbar ist.

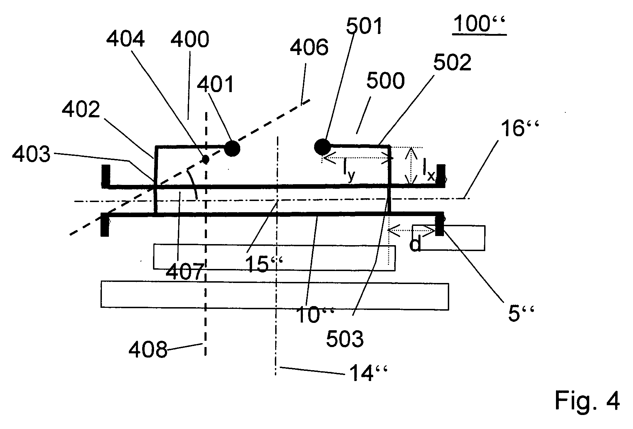

Eine weitere mögliche Ausführungsform 100" eines erfindungsgemäßen Coriolis-Massendurchfluss/Dichte-Aufnehmers zeigt schematisch Fig. 4. Hier bezeichnen die Bezugsziffern 10" das Messrohr, 5" die Flansche, 16" die Messrohrlängsachse, 15" die Messrohrmittelachse und 14" den Messrohrmittelpunkt. Es sind eine erste und eine zweite Auslegermasse 400 und 500 auf dem Messrohr in den Befestigungspunkten 403 und 503 fixiert. Die Auslegermassen 400 und 500 bestehen je aus einem Trägerelement 402, 502 mit L-förmiger Kontur, an denen Massenelemente 401, 501 angebracht sind. Die Auslegermassen 400, 500 sind bezogen auf die Messrohrmittelachse 14" spiegelsymmetrisch an dem Messrohr 10" angebracht. Aufgrund der L-Form des Trägerelements 402, 502 wird erreicht, dass der Schwerpunkt der Auslegermassen außerhalb derselben zu liegen kommt. An der Auslegermasse 400 ist das im Einzelnen gezeigt. Der Schwerpunkt 404 der Auslegermasse 400 liegt so, dass eine Gerade 406, die durch den Schwerpunkt 404 und den Befestigungspunkt 403 des Trägerelements 402 auf der Messrohroberfläche verläuft, also eine Lotlinie, mit der Messrohrlängsachse einen von 90 Grad verschiedenen Winkel 407 bildet. Eine andere Lotlinie 408, die auf der Messrohrlängsachse 16" senkrecht steht, verläuft am Ort der Befestigung der Trägerelements, das ist die Messrohroberfläche, außerhalb des Trägerelements 402.

Wird das Messrohr 10" durch eine (in der Fig. 4 nicht dargestellte) Erregeranordnung in eine gekoppelte Biege-Torsionsschwingung versetzt, so werden an den Befestigungsstellen 403, 503 Torsion und Biegung gekoppelt. Daraus resultiert, dass die Auslegermassen 400, 500 über die Torsion Kräfte und zusätzlich Momente in Biegerichtung des Rohres ausüben, die bei entsprechender Dimensionierung der Auslegermassen Kräfte und Momente der Biegeoszillation kompensieren können. Insbesondere ist es so möglich, eine sehr gute Balancierung schon mit nur zwei Auslegermassen 400, 500 zu erreichen. Die mechanische Auslegung der Auslegermassen bei dieser Ausgestaltungsform ergibt sich unter Zuhilfenahme derselben, oben bereits erwähnten mechanischen Berechnungsmethoden.

In einer beispielhaften Ausführung gemäß Fig. 4 hat das Messrohr 10" eine Nennweite DN15 und besteht aus Titan, bei einer Messrohrlänge von 46cm. Es sind zwei gleichartig aufgebaute Auslegermassen 400 und 500 mit L-förmigem Trägerelement 402, 502 und daran angebrachtem Massenelement 401, 501 der Masse 100g auf dem Messrohr fixiert. Die Abschnittslängen des L-förmigen Trägerelements betragen jeweils senkrecht zur Messrohroberfläche Iₓ = 9,6 cm und parallel zur Messrohrlängsachse 16" l_{y} = 8,9cm. Der Abstand des jeweiligen Befestigungspunktes 403, 503 von dem Messrohreinlass - bzw. Messrohrauslassende beträgt d = 3cm. Selbstverständlich sind alle anderen denkbaren Varianten, insbesondere mit anderen geometrischen Maßen und anderen Werten für die Massen der Massenelemente möglich und ebenso Gegenstand der vorliegenden Erfindung.

## Patentansprüche

1. Coriolis-Massendurchfluss/Dichte-Aufnehmer (100), der in eine Rohrleitung einfügbar ist und im Betrieb von einem zu messenden Fluid durchströmt wird,
- mit einem einzigen, geraden, eine Längsachse (16), ein Einlassende (11) und ein Auslassende (12) aufweisenden Messrohr (10),
- mit einer das Messrohr (10) wenigstens in Biegeschwingungen versetzenden Erregeranordnung (40),
- mit wenigstens zwei Sensoren (30) zur Erfassung der Bewegung des Messrohres (10), und
- mit eingangsseitig und ausgangsseitig an das Messrohr angebrachten Flanschen (5a, 5b),
**dadurch gekennzeichnet**,
a. dass das Messrohr (10) durch die Erregeranordnung (40) in gekoppelte Biege- und Torsionsschwingungen versetzbar ist,
b. dass an dem Messrohr (10) wenigstens zwei Auslegermassen (200, 300) fixiert sind,
c. dass die Schwerpunkte (204, 304) der Auslegermassen (200, 300) in einer gemeinsamen, senkrecht zur Biegeschwingungsebene durch die Längsachse (16) des Messrohres (10) verlaufenden Ebene liegen, jedoch im Allgemeinen nicht auf der Längsachse (16) des Messrohres (10), und
d. dass die Auslegermassen (200, 300) hinsichtlich ihrer Massen, der Lage ihrer Schwerpunkte und ihrer inneren Trägheitsmomente so ausgebildet und an dem Messrohr (10) angeordnet sind, dass eine optimierte Balancierung des Gerätes erreicht ist.

2. Coriolis-Massendurchfluss/Dichte-Aufnehmer nach Anspruch 1, **dadurch gekennzeichnet, dass** ein wenigstens zu einem Teil geschlossenes Trag-Gehäuse (4) vorgesehen ist, das mit den Flanschen (5a, 5b) verbunden ist, wobei ein erster Flansch (5b) direkt am Einlassende (11) und ein zweiter Flansch (5a) direkt am Auslassende (12) des Messrohres (10) fixiert sind.

3. Coriolis-Massendurchfluss/Dichte-Aufnehmer (100) nach Anspruch 2, **dadurch gekennzeichnet, dass** eine Längs-Schwerelinie des Trag-Gehäuses parallel zur Längsachse (16) des Messrohres verläuft und mit dieser zusammenfällt.

4. Coriolis-Massendurchfluss/Dichte-Aufnehmer (100) nach Anspruch 1, **dadurch gekennzeichnet, dass** die Auslegermassen (20, 20b, 20a, 20d, 200, 300, 400, 500) aus jeweils einem auf dem Messrohr fixierten Trägerelement (22, 202, 302, 402, 502) mit wenigstens einem daran angebrachten Massenelement (21, 201, 301, 401, 501) bestehen.

5. Coriolis-Massendurchfluss/Dichte-Aufnehmer (100) nach Anspruch 4, **dadurch gekennzeichnet, dass** die Lotlinie (205, 305) jeder Auslegermasse (200, 300), die senkrecht auf der Biegeschwingungsebene und der Längsachse (16) des Messrohres (10) steht, am Ort (203, 303) der Befestigung des Trägerelementes (202, 302) auf dem Messrohr (10) innerhalb des Trägerelementes (202, 302) verläuft.

6. Coriolis-Massendurchfluss/Dichte-Aufnehmer nach Anspruch 4, **dadurch gekennzeichnet, dass** die Lotlinie (406) jeder Auslegermasse, die senkrecht auf der Biegeschwingungsebene und der Längsachse des Messrohres steht, das Messrohr außerhalb des Ortes (403) der Befestigung des Trägerelementes (402) auf dem Messrohr (10") schneidet.

7. Coriolis-Massendurchfluss/Dichte-Aufnehmer nach einem der vorherigen Ansprüche, **dadurch gekennzeichnet, dass** die Auslegermassen (20, 20a, 20b, 20d) paarweise symmetrisch bezogen auf eine senkrecht zur Biegeschwingungsebene durch den auf der Längsachse gelegenen Mittelpunkt (14) des Messrohres (10) verlaufenden Geraden (15) angeordnet sind.

8. Coriolis-Massendurchfluss/Dichte-Aufnehmer nach einem der vorherigen Ansprüche, **dadurch gekennzeichnet, dass** wenigstens ein Massenelement (301) auf wenigstens einem Trägerelement (302) ortsverschieblich verstellbar ist, so dass dadurch die Lage des Schwerpunkts (304) der Auslegermasse (300) in einer senkrecht zur Biegeschwingungsebene stehenden Ebene veränderbar ist.

9. Coriolis-Massendurchfluss/Dichte-Aufnehmer nach einem der vorhergehenden Ansprüche, **dadurch gekennzeichnet, dass** die Sensoren zur Erfassung der Bewegung des Messrohres in den Auslegermassen integriert sind.

10. Coriolis-Massendurchfluss/Dichte-Aufnehmer nach Anspruch 9, **dadurch gekennzeichnet, dass** der Einwirkungspunkt des Erregers (16) an einer der Auslegermassen liegt.

11. Coriolis-Massendurchfluss/Dichte-Aufnehmer nach Anspruch 9, **dadurch gekennzeichnet, dass** der Einwirkungspunkt des Erregers (16) auf das Messrohr (10) zwischen dem Einlassende (11) bzw. dem Auslassende (12) und einer Auslegermasse liegt.

12. Coriolis-Massendurchfluss/Dichte-Aufnehmer nach Anspruch 11, **dadurch gekennzeichnet, dass** der Einwirkungspunkt des Erregers (16) auf das Messrohr (10) zwischen zwei Auslegermassen liegt.

13. Coriolis-Massendurchfluss/Dichte-Aufnehmer nach einem der vorhergehenden Ansprüche, **dadurch gekennzeichnet, dass** an dem Einlassflansch (5b, 5b') mittels eines das Messrohr (10) konzentrisch umgebenden Einlass-Rohrstückes (4b) eine das Messrohr (10) umfassende, aber nicht berührende Einlassplatte (2) angebracht ist, dass an dem Auslassflansch (5a, 5a') mittels eines das Messrohr (10) konzentrisch umgebenden Auslassrohrstückes (4a) eine das Messrohr (10) umfassende, aber nicht berührende Auslassplatte (3) angebracht ist, und dass an der Einlass- und Auslassplatte ein Verbindungselement (1) befestigt ist.

14. Coriolis-Massendurchfluss/Dichte-Aufnehmer nach einem der vorhergehenden Ansprüche, **dadurch gekennzeichnet, dass** an der Einlassplatte (2) und der Auslassplatte (3) wenigstens eine erste (50) und eine zweite (51) Trägerschiene fixiert sind, die parallel zur Längsachse (16) des Messrohres (10) verlaufen, sich bezogen auf die Längsachse des Messrohres diametral gegenüber liegen und deren Schwereachsen zusammen mit der Längsachse des Messrohres in einer ersten Schienenebene liegen.

15. Coriolis-Massendurchfluss/Dichte-Aufnehmer nach Anspruch 14, **dadurch gekennzeichnet, dass** an der Einlassplatte und der Auslassplatte vier Trägerschienen befestigt sind, die zueinander so angeordnet sind, dass sie die Seitenkanten eines Quaders bilden, dessen Symmetrieachse mit der Längsachse des Messrohres zusammenfällt und dessen Stirnflächen durch die Einlassplatte und die Auslassplatte gebildet sind.

16. Coriolis-Massendurchfluss/Dichte-Aufnehmer nach Anspruch 15, **dadurch gekennzeichnet, dass** in der Mitte zwischen Einlass- und Auslassende 11, 12 des Messrohres 10 jeweils benachbarte Trägerschienen durch Verbindungsschienen so verbunden sind, dass ein an den Trägerschienen fixierter rechteckiger Tragrahmen 65 entsteht, der senkrecht zur Längsachse 16 des Messrohres 10 orientiert ist.

17. Coriolis-Massendurchfluss/Dichte-Aufnehmer nach Anspruch 16, **dadurch gekennzeichnet, dass** die Erregeranordnung 40 an dem Tragrahmen 65 befestigt ist.

18. Coriolis-Massendurchfluss/Dichte-Aufnehmer nach Anspruch 17, **dadurch gekennzeichnet, dass**
- an dem Messrohr 10 senkrecht zur Biegeschwingungsebene des Messrohres 10 eine Fahne 41 mit im wesentlichen rechteckiger Umfangskontur befestigt ist,
- auf beiden Seiten der Mittelachse 15 des Messrohres an dem Rahmen 65 eine erste und eine zweite Spule 44, 42 befestigt sind, welche im wesentlichen Torusspulen ohne Kern sind,
- die beiden Spulen 44, 42 spiegelsymmetrisch zum Mittelpunkt 14 des Messrohres 10 und auf verschiedenen Seiten bezüglich der Biegeschwingungsebene 48 des Messrohres 10 angeordnet sind,
- an der Fahne 41 ein erster und ein zweiter zylindrischer Magnetkörper 45, 43 so angebracht sind, dass der erste zylindrische Magnetkörper 45 in die erste Spule 44 eintaucht und der zweite zylindrische Magnetkörper 43 in die zweite Spule 42 eintaucht, und dass
- die Spulen 44, 45 wechselweise so von Strom durchflossen werden, dass abwechselnd der erste zylindrische Magnetkörper 45 in die erste Spule 44, und der zweite zylindrische Magnetkörper 43 in die zweite Spule 42 hineingezogen werden, wodurch das Messrohr 10 zu einer Torsionsschwingung um seine Längsachse anregbar ist und die Auslegermassen 20, 20a, 20b, 20d über die Torsion Kräfte in Biegerichtung des Messrohres 10 ausüben, so dass damit das Messrohr in eine gekoppelte Biege- und Torsionsschwingung versetzbar ist.
